Europäisches Patentamt

European Patent Office

Office européen des brevets

(11) Veröffentlichungsnummer: **0 284 919**
**A2**

## (12) EUROPÄISCHE PATENTANMELDUNG

(21) Anmeldenummer: 88104319.4

(22) Anmeldetag: 18.03.88

(51) Int. Cl.4: **C01B 33/22**

(30) Priorität: 28.03.87 DE 3710433

(43) Veröffentlichungstag der Anmeldung:
05.10.88 Patentblatt 88/40

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Marosi, Laszlo, Dr.**
**Leuschnerstrasse 32**
**D-6700 Ludwigshafen(DE)**
Erfinder: **Stabenow, Joachim, Dr.**
**Am Feldrain 22**
**D-6940 Weinheim(DE)**
Erfinder: **Eger, Knut, Dr.**
**Donnersbergstrasse 1**
**D-6703 Limburgerhof(DE)**
Erfinder: **Irgang, Matthias, Dr.**
**Andreas-Hofer-Weg 41**
**D-6900 Heidelberg(DE)**
Erfinder: **Zirker, Günther, Dr.**
**Schelmenzeile 78**
**D-6700 Ludwigshafen(DE)**

(54) **Verfahren zur Herstellung von amorphen Metall-Magnesiumsilikaten.**

(57) Die Anmeldung betrifft ein Verfahren zur Herstellung von amorphen Metall-Magnesiumsilikaten der allgemeinen Formel

$$M_xMg_y(SiO_2) \bullet nH_2O,$$

worin M ein zweiwertiges, reduzierbares Metallatom aus der Gruppe Cu, FeII, Co und Ni, x und y Zahlen sind, die zusammen den Wert von 1,5 erreichen können und n nach Trocknung ausgedrückt in Gew.% zwischen 0 und 80 liegt, dadurch gekennzeichnet, daß man ein frisch gefälltes Magnesiumsilikat einem Ionenaustausch unterwirft, das Produkt wäscht und anschließend -mit Alkali neutralisiert. Vor der Anwendung der Metall-Magnesiumsilikate bei katalytischen Umsetzungen wird das reduzierbare Metall in den Metall-Magnesiumsilikaten mit reduzierenden Gasen in den metallischen Zustand überführt.

EP 0 284 919 A2

## Verfahren zur Herstellung von amorphen Metall-Magnesiumsilikaten

Es ist bekannt, Katalysatoren auf $MgSiO_3$-Trägern für Gasreinigung, Methanisierung, verschiedene Hydrierreaktionen und z.B. zur Herstellung von Acrylsäure aus Acrylamid einzusetzen. Die Katalysatoren können, obwohl sie summarisch die gleiche chemische Zusammensetzung aufweisen, strukturell unterschiedlich aufgebaut und damit auch unterschiedliche katalytische Aktivitäten aufweisen. In vielen Fällen fungiert das $MgSiO_3$ als reines Trägermaterial auf das die Aktivkomponenten, z.B. Ni, Cu-, Fell-oder Co-Salze mit Alkali oder Alkalicarbonaten aufgefällt werden. Man bevorzugt jedoch in der Regel Alkalicarbonate zur Ausfällung der Metallkomponenten.

Es wurde festgestellt, daß je nach Herstellungsweise das $MgSiO_3$ nicht nur als reines Trägermaterial wirkt, sondern auch mit den zugegebenen Metallionen in Gegenwart von z.B. Soda und bei pH-Werten um etwa 7, auch Metall-Magnesium-Silikate wechselnder Zusammensetzung bilden kann, die im Gemisch mit Cu-Salzen als Malachit vorliegen und auch als Katalysator wirken. Diese Art der Katalysatorherstellung hat den Nachteil, daß die Herstellung nur schwer oder garnicht reproduzierbar ist und die Fällungsprodukte oft größere Mengen $CO_2$ enthalten, das bei Gasreinigungsprozessen stört. Daraus ergibt sich eine nicht immer optimale Aktivität.

Ziel der vorliegenden Erfindung ist es, diese Nachteile zu beseitigen und Katalysatoren herzustellen, die eine hohe Aktivität haben und außerdem reproduzierbar hergestellt werden können.

Es wurde nun gefunden, daß man die geschilderten Nachteile vermeidet und aktive, amorphe Metall-Magnesiumsilikate der allgemeinen Formel

$$M_xMg_y(SiO_2) \bullet nH_2O,$$

worin M ein zweiwertiges, reduzierbares Metallatom aus der Gruppe Cu, Fell, Co und Ni, x und y Zahlen sind, die zusammen den Wert von 1,5 erreichen können, und n nach Trocknung ausgedrückt in Gew.% zwischen 0 und 80 liegt, in reproduzierbarer Weise erhält, wenn man ein frisch gefälltes Magnesiumsilikat einem Ionenaustausch unterwirft, das Produkt wäscht und anschließend mit Alkali neutralisiert.

Vor der Anwendung der Metall-Magnesiumsilikate bei katalytischen Umsetzungen wird das reduzierbare Metall in den Metall-Magnesiumsilikaten mit reduzierbaren Gasen in den metallischen Zustand übergeführt.

Der Erfindung liegt der Gedanke zugrunde, daß man aktive Katalysatoren auf Basis $MgSiO_3$ erhält, wenn man die Metallionen nicht wie allgemein üblich durch eine gemeinsame Fällung, sondern durch einen gezielten Ionenaustausch in die amorphe Struktur des $MgSiO_3$ einbaut. Bei der gemeinsamen Fällung kann zwar ein beachtliches Ausmaß an Ionenaustausch stattfinden, doch sind die erhaltenen Katalysatoren aus mehreren Komponenten aufgebaut und je nach Herstellungsweise nicht reproduzierbar bzw. einheitlich herzustellen.

Die erfindungsgemäß hergestellten Mg-Silikate sind amorphe Produkte mit einheitlicher Zusammensetzung und hoher katalytischer Aktivität. Vorteilhafterweise wird der zuerst hergestellte Mg-Silikat-Niederschlag filtriert und mit den entsprechenden Metallsalzen versetzt. Dabei findet ein Ionenaustausch statt, wobei amorphe Verbindungen der allgemeinen Formel

$$M_xMg_y(SiO_2) \bullet nH_2O,$$

entstehen, die nach Reduktion besonders feinverteilte Metalle, oder nach Zersetzung besonders feinverteilte Metalloxide ergeben.

Metall-Atome, die leicht in das Magnesiumsilikatgitter eingebaut werden können, sind z.B. Cu, Fell, Co und Ni. Es kommen aber auch andere zweiwertige Me-Salze als Ionenaustauschkomponente in Frage.

Es ist zweckmäßig das Produkt nach dem Ionenaustausch anschließend z.B. mit Alkali oder Soda zu neutralisieren, zu waschen, trocknen und zu kalzinieren. Trotz der Neutralisierung mit Soda ist der $CO_2$-Gehalt der Fällungsprodukte erstaunlich gering, so daß bei Gasreinigungsprozessen keine Nachteile entstehen. Das zum Ionenaustausch erforderliche Magnesiumsilikat kann z.B. durch gemeinsame Fällung von Wasserglas mit z.B. Mg-$(NO_3)_2$-Lösungen hergestellt werden. Es ist vorteilhaft, wenn dabei das $MgO:SiO_2$-Verhältnis $\leq 1$ eingestellt wird.

Die erfindungsgemäß hergestellten Katalysatoren können nach Reduktion mit geeigneten Gasen für verschiedene Anwendungen, z.B. bei Gasreinigung, Methanisierung, Hydrierung zur Herstellung von Acrylsäure durch Wasseranlagerung an Acrylamid und für Krackreaktionen eingesetzt werden.

Beispiel

Herstellung von amorphen Cu-Mg-Silikaten

Eine Lösung 1, bestehend aus
100 g Wasserglas (26,9% $SiO_2$, 8,7% $Na_2O$),
21,03 g NaOH und
89.3 g Wasser und
eine Lösung 2, bestehend aus
98 g $Mg(NO_3)_2$ x 6 $H_2O$ und

50,3 g Wasser

werden in etwa 20 Min. bei 30°C in eine Vorlage von 500 ml $H_2O$ gleichzeitig eingegeben. Nach Beendigung der Fällung wird die entstandene Suspension etwa 10 Min. nachgerührt. Der pH-Wert beträgt 9 - 10.

Anschließend werden 0,3 Mol $Cu(NO_3)_2$ x 3 $H_2O$ (72,48 g) in 120 ml $H_2O$ gelöst und unter Rühren zu der Mg-Silikat-Suspension hinzugegeben. Es wird so lange weitergerührt, bis das Filtrat farblos ist.

Der blaue Niederschlag wird dann filtriert, mit 1,2 l $H_2O$ gewaschen und in 500 ml 7,5%ige Sodalösung eingegeben. Nach 15 Min. Rühren wird der Niederschlag filtriert, gewaschen und getrocknet.

Das Produkt ist ein amorphes Cu-Mg-Silikat und enthält 35% CuO, 9% MgO und 38% $SiO_2$. Der $CO_2$-Gehalt beträgt maximal 1,5%. Das Produkt ist bis mindestens 400°C thermisch beständig und ergibt beim Calcinieren kein CuO.

Reduktion der Metall-Magnesiumsilikate:

Dieses Produkt wird anschließend bei 300°C kalziniert und zu Pillen 3x5 mm gepreßt. Die Festigkeit beträgt 300 kg/cm². Für die Anwendung der Pillen als Katalysatoren werden diese in dem vorgesehen Reaktor mit einem Gasgemisch aus z.B. 2% $H_2$ und 98% $N_2$ bei 220°C und Normaldruck behandelt bis kein $H_2O$-Dampf mehr im Abgas nachweisbar ist. Der Katalysator kann unmittelbar für die Entfernung von Sauerstoffspuren aus Gasen bis auf wenige ppm eingesetzt werden.

## Ansprüche

1. Verfahren zur Herstellung von amorphen Metall-Magnesiumsilikaten der allgemeinen Formel
$$M_xMg_y(SiO_2) \cdot nH_2O,$$
worin M ein zweiwertiges, reduzierbares Metallatom aus der Gruppe Cu, FeII, Co und Ni, x und y Zahlen sind, die zusammen den Wert von maximal etwa 1,5 erreichen können und n nach Trocknung ausgedrückt in Gew.% zwischen 0 und 80 liegt, dadurch gekennzeichnet, daß man ein frisch gefälltes Magnesiumsilikat einem Ionenaustausch unterwirft, das Produkt wäscht und anschließend mit Alkali neutralisiert.

2. Verfahren zur Anwendung der nach Anspruch 1 hergestellten Metall-Magnesiumsilikate bei katalytischen Umsetzungen, dadurch gekennzeichnet, daß man das reduzierbare Metall in den Metall-Magnesiumsilikaten vor der Verwendung als Katalysator mit reduzierenden Gasen in dem metallischen Zustand überführt.